# FASCICULE DE BREVET EUROPEEN

(11) **EP 4 133 590 B1**
(45) Date de publication et mention de la délivrance du brevet: **24.01.2024**
(21) Numéro de dépôt: 21722273.6
(22) Date de dépôt: 01.04.2021
(51) Int. Cl.: H02S 20/10, H02S 20/20, H02S 20/32

(54) **POUTRE DE SOUTIEN EN TREILLIS ET SUIVEUR SOLAIRE COMPORTANT UNE TELLE POUTRE**
GITTERFÖRMIGER TRÄGERBALKEN UND SONNENFOLGER MIT EINEM SOLCHEN TRÄGER
LATTICE-FORM SUPPORT BEAM AND SOLAR TRACKER HAVING SUCH A BEAM

(30) Priorité: 08.04.2020 FR 2003501
(43) Date de publication de la demande: 15.02.2023
(73) Titulaire: Nexans, 92400 Courbevoie (FR)
(72) Inventeur: VIENNOIS, Fabien, 74140 MESSERY (FR); MICOLI, Christophe, 13009 MARSEILLE (FR); TORDO, Jérôme, 13100 AIX-EN-PROVENCE (FR)
(74) Mandataire: Ipsilon
(86) Numéro de dépôt international: PCT/FR2021/050572
(87) Numéro de publication internationale: WO 2021/205097

(56) Documents cités:
- WO-A1-2018/033495
- WO-A1-2018/121778
- CN-A- 105 242 372
- CN-A- 106 788 182
- CN-A- 107 026 604
- CN-U- 206 506 474

## Description

### Domaine technique

La présente invention concerne de manière générale une poutre de soutien en treillis comportant une pluralité de longerons parallèles reliés entre eux par des traverses et des tirants.

L'invention concerne plus particulièrement une poutre de soutien en treillis à section transversale triangulaire comportant :
- un ensemble de trois longerons s'étendant parallèlement selon une direction principale d'extension de la poutre,
- une pluralité d'assemblages triangulaires répartis le long de la direction principale d'extension et s'étendant chacun dans un plan perpendiculaire à ladite direction principale d'extension, chaque assemblage triangulaire étant formé par trois traverses reliant mécaniquement les longerons deux à deux,
- une pluralité de tirants reliant chacun mécaniquement les longerons deux à deux en s'étendant entre deux assemblages triangulaires consécutifs, et
- une pluralité de platines de fixation fixées aux longerons pour permettre la fixation des extrémités des traverses et des tirants.

### Arrière-plan technologique

Une telle poutre en treillis est déjà connue et utilisée notamment, comme décrit dans le document WO 2018/033495, pour servir de structure de support d'une table d'un suiveur solaire équipée d'au moins un dispositif de collecte d'énergie solaire.

Un suiveur solaire comporte ainsi la poutre de soutien qui supporte des dispositifs de collecte d'énergie solaire, par exemple des panneaux photovoltaïques, et qui est entraînée en rotation par un dispositif d'entraînement motorisé afin que les panneaux restent toujours orientés face au soleil tout au long de la journée. Le but d'une telle structure mobile en rotation est d'augmenter le rendement des panneaux photovoltaïques.

Un grand nombre (typiquement d'une centaine à plusieurs milliers) de suiveurs solaires sont généralement installés sur un même site d'une centrale solaire à champ libre, plus communément appelée « ferme solaire ».

Un des enjeux majeurs consiste à obtenir un coût de revient de l'énergie collectée par une ferme solaire qui soit le plus faible possible. La réduction de ce coût de revient passe par l'augmentation du rendement des fermes solaires, mais aussi par une réduction des coûts de transport et d'installation des suiveurs solaires.

La poutre de soutien en treillis telle que décrite dans le document WO 2018/033495 a un impact très important sur les coûts de transport et d'installation compte-tenu d'une part, du nombre important de composants qu'il est nécessaire d'assembler entre eux pour former la poutre, et d'autre part, du volume important de cette poutre.

Afin de réduire les coûts de transport, il est déjà connu d'acheminer les différents composants sur le site de la ferme solaire qui doit accueillir les suiveurs solaires afin de les assembler directement sur les emplacements prévus.

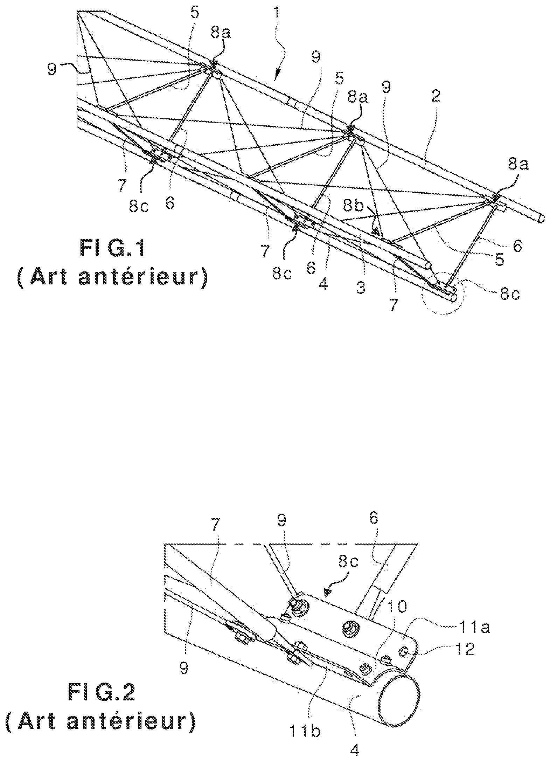

Les figures 1 et 2 donnent un exemple d'une poutre 1 de soutien en treillis connue après assemblage, la figure 2 étant une vue agrandie de la zone représentée par un cercle en pointillés sur la figure 1. La poutre 1 sur la figure 1 comporte un ensemble de trois longerons 2, 3 et 4 s'étendant parallèlement selon une direction principale d'extension de la poutre. Chaque longeron est constitué d'un tube métallique ou d'une pluralité de portions de tubes métalliques mises bout à bout selon la direction principale d'extension.

La poutre 1 comporte en outre des traverses 5, 6 et 7 permettant de maintenir un écart entre les trois longerons 2, 3 et 4 en conférant à la poutre 1 de soutien en treillis une section transversale triangulaire. Plus précisément, la poutre 1 étant utilisée, dans cet exemple non limitatif, comme poutre de soutien pour table d'un suiveur solaire :
- les deux longerons 2 et 3 constituent ici respectivement un premier longeron supérieur et un deuxième longeron supérieur (sur lesquels la table non représentée doit reposer) alors que le longeron 4 constitue un longeron inférieur ; et
- les traverses 5, 6 et 7 sont réparties le long de la direction principale d'extension et relient mécaniquement les longerons deux à deux de sorte que chaque groupe de traverses 5, 6 et 7 forme un assemblage triangulaire s'étendant dans un plan perpendiculaire à la direction principale d'extension des longerons.

Dans la suite :
- les traverses 5 constituent des traverses supérieures qui relient le premier longeron supérieur 2 au deuxième longeron supérieur 3 ;
- les traverses 6 constituent des premières traverses latérales qui relient le premier longeron supérieur 2 au longeron inférieur 4 ; et
- les traverses 7 constituent des deuxièmes traverses latérales qui relient le deuxième longeron supérieur 3 au longeron inférieur 4.

La figure 1 illustre ainsi trois groupes de traverses 5, 6, 7 formant trois assemblages triangulaires consécutifs s'étendant chacun dans un plan perpendiculaire à la direction principale d'extension de la poutre 1.

La fixation des extrémités des traverses 5, 6 et 7 formant un même assemblage triangulaire aux trois longerons 2, 3 et 4 est effectuée au moyen de trois pièces intermédiaires ou platines de fixation 8a, 8b, 8c, elles-mêmes fixées respectivement sur les longerons 2, 3 ou 4, par exemple par rivetage. Pour réaliser la fixation de plusieurs assemblages triangulaires, une pluralité de platines de fixation doit donc être fixée, de préférence à intervalle régulier, le long de chaque longeron 2, 3 ou 4. Ainsi, la figure 1 montre :
- trois platines de fixation 8a fixées à intervalle régulier sur le premier longeron supérieur 2 ;
- trois platines de fixation, telles que la platine 8b, fixées à intervalle régulier sur le deuxième longeron supérieur 3 ; et
- trois platines de fixation 8c fixées à intervalle régulier sur le longeron inférieur 4.

Comme plus particulièrement visible sur la zone agrandie représentée sur la figure 2, une platine de fixation 8c est ainsi fixée par des rivets au longeron inférieur 4 pour servir de fixation aux extrémités inférieures d'une première traverse latérale 6 et d'une deuxième traverse latérale 7.

Afin de rigidifier la poutre de soutien, celle-ci comporte en outre une pluralité de tirants 9 (schématisés par des lignes sur la figure 1) reliant chacun mécaniquement les longerons deux à deux en s'étendant entre deux assemblages triangulaires consécutifs. Les deux extrémités de chaque tirant sont fixées également aux platines de fixation 8a, 8b ou 8c.

Ainsi, comme plus particulièrement visible sur la zone agrandie représentée sur la figure 2, la platine de fixation 8c sert de fixation non seulement aux extrémités inférieures des deux traverses latérales 6 et 7, mais aussi aux extrémités respectives de quatre tirants 9 (seuls deux tirants ayant été représentés sur la figure 2). Pour ce faire, dans le cas non limitatif illustré où les longerons sont de forme tubulaire, chaque platine de fixation 8c comporte une surface centrale 10 épousant la forme extérieure des longerons ainsi que deux ailettes planes 11a et 11b prolongeant latéralement la surface centrale 10 et s'étendant radialement par rapport au longeron 4. Les ailettes planes 11a et 11b comportent chacune trois trous traversants, tels que le trou référencé 12, pour permettre la fixation des extrémités d'une traverse et de deux tirants par autant de systèmes de boulonnage, ces extrémités de traverses et de tirants comportant par ailleurs une zone de fixation plane munie d'un orifice traversant mis en regard d'un trou traversant 12 pour l'opération d'assemblage. Ainsi, comme visible sur la figure 2 :
- l'ailette plane 11a comprend un premier trou pour la fixation d'une extrémité d'un premier tirant 9 (dont l'autre extrémité, visible sur la figure 1, est fixée au longeron supérieur 2 par l'intermédiaire d'une platine de fixation 8a, un deuxième trou pour la fixation de la traverse 6, et un troisième trou pour la fixation d'une extrémité d'un deuxième tirant non représenté ;
- l'ailette plane 11b comprend un premier trou pour la fixation d'une extrémité d'un troisième tirant 9, un deuxième trou pour la fixation de la traverse 7, et un troisième trou pour la fixation d'une extrémité d'un quatrième tirant non représenté.

Comme on l'aura compris, chaque platine de fixation 8a, 8b ou 8c permet la fixation d'une extrémité de deux traverses appartenant à un même assemblage triangulaire et d'une extrémité de quatre tirants dont les deuxièmes extrémités sont fixées quant à elles à d'autres platines de fixation.

Dans le cas où l'on souhaite obtenir des assemblages triangulaires équilatéraux (pour lesquels les traverses supérieures 5 et les premières et deuxièmes traverses latérales 6 et 7 sont de même longueur), les platines de fixation 8a, 8b, 8c sont avantageusement toutes identiques, et comportent chacune deux ailettes planes 11a, 11b formant entre elles un angle sensiblement égal à 60°. Dans le cas où l'on souhaite obtenir des assemblages triangulaires isocèles (cas où seules les premières et deuxièmes traverses latérales 6 et 7 sont de même longueur), les platines de fixation 8c fixées au longeron inférieur 4 comportent chacune deux ailettes planes 11a, 11b formant entre elles un angle sensiblement égal à 90°, alors que les platines de fixation 8a et 8b, fixées respectivement aux longerons supérieurs 2 et 3, comportent chacune deux ailettes planes 11a, 11b formant entre elles un angle sensiblement égal à 45°.

Dans tous les cas, il faut donc six systèmes de boulonnage, chaque système comportant une vis et un écrou, pour fixer les extrémités de deux traverses et de quatre tirants à une même platine de fixation 8a, 8b ou 8c.

L'utilisation de ces platines de fixation augmente ainsi le coût d'une part, de fabrication et d'autre part, de montage des poutres de soutien en treillis.

En outre, la totalité des efforts des tirants et traverses passe à travers de la platine de fixation qui doit être dimensionnée en conséquence pour supporter des efforts importants sans risque de déformation dans les ailettes planes 11a, 11b, ou d'effet d'arrachement de la platine par rapport au longeron sur lequel elle est fixée.

### Résumé de l'invention

La présente invention propose de pallier les inconvénients de l'art antérieur en proposant des poutres de soutien en treillis similaires à celle représenté sur la figure 1, mais pour lesquelles les platines de fixation ont été modifiées.

Plus particulièrement, la présente invention a pour objet une poutre de soutien en treillis à section transversale triangulaire, telle que définie dans la revendication 1.

Selon un mode de réalisation possible, chaque platine de fixation est solidarisée au longeron donné au moyen de rivets au niveau de la surface centrale.

Selon un mode de réalisation possible, l'extrémité du premier tirant, respectivement du troisième tirant, est en contact avec la face externe de la première ailette plane, respectivement la face externe de la deuxième ailette plane.

Dans ce mode de réalisation, l'extrémité du deuxième tirant, respectivement du quatrième tirant, comprend de préférence un dispositif de rattrapage de jeu.

Selon un mode de réalisation possible, ledit même orifice de fixation de la première ailette plane, respectivement de la deuxième ailette plane, est situé de préférence au centre de la première ailette plane, respectivement de la deuxième ailette plane.

Selon un mode de réalisation possible, ledit ensemble de trois longerons est constitué d'un longeron inférieur, d'un premier longeron supérieur et d'un deuxième longeron supérieur, et chaque assemblage triangulaire comporte une traverse supérieure reliant le premier longeron supérieur avec le deuxième longeron supérieur, une première traverse latérale reliant le premier longeron supérieur avec le longeron inférieur et une deuxième traverse latérale reliant le deuxième longeron supérieur avec le longeron inférieur,
la première extrémité et la deuxième extrémité de chaque traverse supérieure d'un assemblage triangulaire donné étant fixées directement respectivement sur une première platine de fixation de ladite pluralité des platines de fixation fixée au premier longeron supérieur et sur une deuxième platine de fixation de ladite pluralité des platines de fixation fixée au deuxième longeron supérieur,
la première extrémité et la deuxième extrémité de chaque première traverse latérale dudit assemblage triangulaire donné étant fixées directement respectivement sur la première platine de fixation et sur une troisième platine de fixation de ladite pluralité des platines de fixation fixée au longeron inférieur,
et la première extrémité et la deuxième extrémité de chaque deuxième traverse latérale dudit assemblage triangulaire donné étant fixées directement, respectivement sur la deuxième platine de fixation et sur la troisième platine de fixation.

Dans un mode de réalisation possible, les traverses supérieures et les premières et deuxièmes traverses latérales sont de même longueur de manière à obtenir des assemblages triangulaires équilatéraux, et la première ailette plane et la deuxième ailette plane de chacune des première, deuxième et troisième platines de fixation forment entre elles un angle sensiblement égal à 60°.

En variante, les premières et deuxièmes traverses latérales sont de même longueur de manière à obtenir des assemblages triangulaires isocèles, la première ailette plane et la deuxième ailette plane de chacune des première et deuxième platines de fixation forment entre elles un angle sensiblement égal à 45°, et la première ailette plane et la deuxième ailette plane de la troisième platine de fixation forment entre elles un angle sensiblement égal à 90°.

Une poutre selon ce mode de réalisation peut par exemple supporter une table d'un suiveur solaire, ladite table étant équipée d'au moins un dispositif de collecte d'énergie solaire et reposant sur le premier longeron supérieur et sur le deuxième longeron supérieur.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
La figure 1, déjà décrite ci-avant, représente un exemple de poutre de soutien en treillis connue ;
La figure 2, déjà décrite ci-avant, illustre un agrandissement d'une partie de la poutre de soutien en treillis de la figure 1 ;
La figure 3 représente deux vues partielles (a) et (b) illustrant, sous deux angles différents, un exemple de fixation de tirants et de traverses sur une platine de fixation fixée à un longeron inférieur d'une poutre de soutien en treillis, conformément à une mode de réalisation possible de la présente invention.

### Description de mode(s) de réalisation

Dans les figures, et à moins qu'il n'en soit disposé autrement, les éléments identiques ou similaires porteront les mêmes signes de référence.

Comme cela a été indiqué précédemment, l'invention concerne une de poutre de soutien en treillis similaire à celle représentée sur la figure 1, dont les différents éléments communs (longerons 2, 3, 4, traverses 5, 6, et 7 formant les assemblages triangulaires) ne seront pas décrits de nouveau. Dans la suite, seule la modification apportée aux platines de fixation conformément à l'invention va être présentée.

On suppose dans la suite, à titre non limitatif, que les premières et deuxièmes traverses latérales 6, 7 décrites précédemment sont toutes de même longueur de manière à obtenir des assemblages triangulaires isocèles. On rappelle que, dans ce cas, les premières platines de fixation 8a et les deuxième platines de fixation 8b, fixées respectivement aux longerons supérieurs 2 et 3, doivent comporter chacune deux ailettes planes formant entre elles un angle sensiblement égal à 45°, alors que les troisième platines de fixation 8c, fixées au longeron inférieur 4, doivent comporter chacune deux ailettes planes formant entre elles un angle sensiblement égal à 90°. Les trois platines de fixation 8a, 8b et 8c ne différant dans ce cas que par l'angle formé par les ailettes planes, la description qui va suivre s'attache, pour simplifier, à décrire le principe de l'invention pour la platine de fixation 8c.

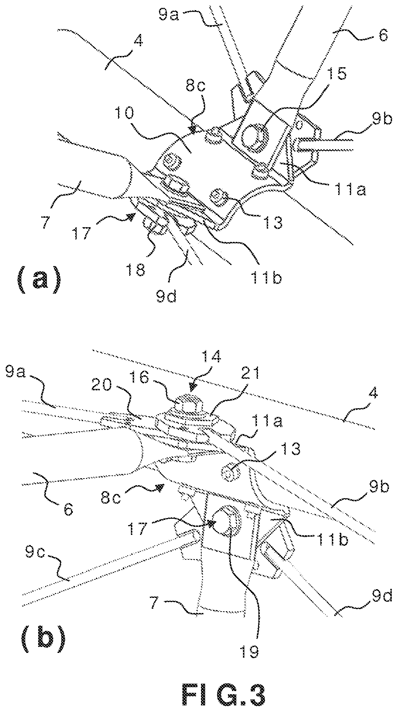

Ainsi, la figure 3 représente deux vues partielles (a) et (b) montrant une platine de fixation 8c fixée au longeron inférieur 4 de la structure de poutre en treillis. La platine de fixation 8c remplace donc, conformément à l'invention, la platine de fixation 8c illustrée sur la figure 2.

Comme cela a été indiqué précédemment, la platine de fixation 8c comporte une surface centrale 10 épousant la forme extérieure du longeron 4 ainsi que deux ailettes planes 11a et 11b prolongeant latéralement la surface centrale 10 et s'étendant radialement par rapport au longeron 4 en formant entre elles un angle sensiblement égal à 90°. La platine de fixation 8c est solidarisée au longeron de préférence au moyen de quatre rivets 13 au niveau de la surface centrale 10. La première ailette plane 11a forme une première surface de fixation pour la fixation amovible d'une extrémité d'une première traverse, ici la première traverse latérale 6 d'une extrémité d'un premier tirant 9a et d'une extrémité d'un deuxième tirant 9b. La deuxième ailette plane 11b forme une deuxième surface de fixation pour la fixation amovible d'une extrémité d'une deuxième traverse, ici la deuxième traverse latérale 7, d'une extrémité d'un troisième tirant 9c et d'une extrémité d'un quatrième tirant 9d parmi ladite pluralité de tirants.

En revanche, de manière différente à la platine 8c de la figure 2 qui comportait six trous traversants 12, chaque ailette plane 11a et 11b de la platine de fixation 8c comporte ici, conformément à l'invention, un unique orifice de fixation, de préférence situé en son centre. Ainsi, comme visible sur la figure 3, l'extrémité de la première traverse 6, l'extrémité du premier tirant 9a et l'extrémité du deuxième tirant 9b sont fixées ensemble par un unique premier système de boulonnage 14 comportant une vis de fixation 15 traversant l'orifice de fixation de la première ailette plane 11a, et un écrou 16 de serrage. De même, l'extrémité de la deuxième traverse 7, l'extrémité du troisième tirant 9c et l'extrémité du quatrième tirant 9d sont fixées ensemble par un unique deuxième système de boulonnage 17 comportant une vis de fixation 18 traversant l'orifice de fixation de la deuxième ailette plane 11b, et un écrou 19 de serrage.

Les extrémités des traverses 6 et 7 sont de préférence fixées sur les faces internes des ailettes planes 11a et11b, c'est-à-dire les faces des ailettes qui sont en vis-à-vis, alors que les extrémités des tirants 9a, 9b, 9c, 9d sont de préférence fixées sur les faces externes des ailettes planes 11a et 11b.

Dans un mode de réalisation possible, les extrémités des deux tirants qui sont fixées sur une même ailette plane de fixation sont identiques, et sont classiquement formées par un embout aplati fixé ou intégré à une extrémité du corps longitudinal du tirant (voir par exemple l'extrémité aplatie 20 pour le tirant 9a sur la figure 4) percé d'une ouverture circulaire traversante pour permettre le passage de la vis du système de boulonnage.

Dans un autre mode de réalisation, une extrémité d'un des deux tirants comporte en outre un dispositif de rattrapage de jeu, par exemple une rondelle excentrique permettant de faire varier l'entraxe de fixation entre les deux extrémités de ce tirant. Dans le cas de la figure 3, l'extrémité du tirant 9b d'une part, et du tirant 9d d'autre part, comprend un tel dispositif de rattrapage de jeu 21. Dans ce mode de réalisation, afin de faciliter les opérations de montage, les tirants dont l'extrémité ne comprend pas de dispositif de rattrapage de jeu (à savoir le premier tirant 9a et le troisième tirant 9c de la figure 3) sont montés de préférence en premier, de sorte que leur extrémité respective soit en contact avec la surface de fixation formée par l'ailette plane correspondante. Les tirants dont l'extrémité comprend un dispositif de rattrapage de jeu (à savoir le deuxième tirant 9b et le quatrième tirant 9d de la figure 3) sont alors montés au-dessus, de sorte que leur extrémité respective est en contact avec l'extrémité du tirant monté en premier.

Dans tous les cas, l'utilisation de platines de fixation conformes à ce qui vient d'être décrit permet de diviser par trois le nombre de systèmes de boulonnage nécessaires au montage de la structure de poutre en treillis, ce qui permet un gain de temps au montage et contribue à une réduction du poids total de la poutre de soutien en treillis.

En outre, comme deux tirants et une traverse sont maintenus en un seul point pour chaque ailette plane 11a, 11b, les efforts de ces deux tirants et de cette traverse sont transmis d'abord à la vis du système de boulonnage associé avant d'être transmis à la platine de fixation. Des simulations ont notamment permis de montrer que, dans une même situation de charge, une platine de fixation telle que la platine de fixation 8c de la figure 3 recevait jusqu'à 70% d'effort en moins par rapport à la platine de fixation 8c de la figure 2.

Par ailleurs, le fait que la direction des efforts des deux tirants et d'une traverse passe par le centre de l'ailette plane correspondante permet de diminuer les risques d'arrachement de la platine de fixation par rapport au longeron, et de déformation des ailettes planes.

La platine de fixation étant soumise directement à moins d'efforts, il est également possible de réduire sa taille, plus précisément la longueur de sa surface centrale 10 et des ailettes planes 11a, 11b dans la direction longitudinale du longeron 4, de moitié par rapport à la platine de fixation 8c de la figure 2. Il en résulte une réduction de moitié du poids de chaque platine de fixation utilisée pour le montage de poutre de soutien en treillis, ce qui contribue encore à une réduction du poids total de la poutre de soutien en treillis.

Les mêmes avantages que ceux précédemment décrits sont bien entendus obtenus dans le cas où la poutre de soutien en treillis comprend des assemblages triangulaires équilatéraux. Dans ce cas, toutes les platines de fixation fixées aux trois longerons sont identiques et comportent chacune deux ailettes planes formant entre elles un angle égal à sensiblement 60°.

## Revendications

1. Poutre (1) de soutien en treillis à section transversale triangulaire comportant :
- un ensemble de trois longerons (2, 3, 4) s'étendant parallèlement selon une direction principale d'extension de la poutre,
- une pluralité d'assemblages triangulaires répartis le long de la direction principale d'extension et s'étendant chacun dans un plan perpendiculaire à ladite direction principale d'extension, chaque assemblage triangulaire étant formé par trois traverses (5, 6, 7) reliant mécaniquement les longerons deux à deux,
- une pluralité de tirants (9, 9a, 9b, 9c, 9d) reliant chacun mécaniquement les longerons (2, 3, 4) deux à deux en s'étendant entre deux assemblages triangulaires consécutifs,
- une pluralité de platines de fixation (8a, 8b, 8c) fixées aux longerons, chaque platine de fixation (8a, 8b, 8c) fixée à un longeron donné parmi les trois longerons comportant une première ailette plane (11a) et une deuxième ailette plane (11b) s'étendant radialement par rapport audit longeron donné, la première ailette plane (11a) formant une première surface de fixation pour la fixation amovible d'une extrémité d'une première traverse (6) parmi ladite pluralité de traverses, d'une extrémité d'un premier tirant (9a) et d'une extrémité d'un deuxième tirant (9b) parmi ladite pluralité de tirants, et la deuxième ailette plane (11b) formant une deuxième surface de fixation pour la fixation amovible d'une extrémité d'une deuxième traverse (7) parmi ladite pluralité de traverses, d'une extrémité d'un troisième tirant (9c) et d'une extrémité d'un quatrième tirant (9d) parmi ladite pluralité de tirants, chaque platine de fixation (8a, 8b, 8c) comportant une surface centrale (10) épousant la forme extérieure et dudit longeron donné et étant solidarisée audit longeron donné, ladite première ailette plane (11a) et ladite deuxième ailette plane (11b) prolongeant latéralement la surface centrale (10) en s'étendant radialement par rapport au longeron donné,
**caractérisée en ce que** l'extrémité de la première traverse (6), l'extrémité du premier tirant (9a) et l'extrémité du deuxième tirant (9b) sont fixées ensemble par un unique premier système de boulonnage (14) comportant une vis de fixation (15) traversant un même orifice de fixation de la première ailette plane (11a), **en ce que** l'extrémité de la deuxième traverse (7), l'extrémité du troisième tirant (9c) et l'extrémité du quatrième tirant (9d) sont fixées ensemble par un unique deuxième système de boulonnage (17) comportant une vis de fixation (18) traversant un même orifice de fixation de la deuxième ailette plane (11b), **en ce que** l'extrémité de la première traverse (6) est fixée sur une face interne de la première ailette plane (11a) alors que l'extrémité du premier tirant (9a) et l'extrémité du deuxième tirant (9b) sont fixées sur une face externe de la première ailette plane (11a), et **en ce que** l'extrémité de la deuxième traverse (7) est fixée sur une face interne de la deuxième ailette plane (11b) alors que l'extrémité du troisième tirant (9c) et l'extrémité du quatrième tirant (9d) sont fixées sur une face externe de la deuxième ailette plane (11b).

2. Poutre (1) selon la revendication 1, **caractérisée en ce que** chaque platine de fixation (8a, 8b, 8c) est solidarisée au longeron donné (2, 3, 4) au moyen de rivets (13) au niveau de la surface centrale (10).

3. Poutre (1) selon l'une quelconque des revendications précédentes, **caractérisée en ce que** l'extrémité du premier tirant (9a), respectivement du troisième tirant (9c), est en contact avec la face externe de la première ailette plane (11a), respectivement la face externe de la deuxième ailette plane (11b).

4. Poutre (1) selon la revendication 3, **caractérisée en ce que** l'extrémité du deuxième tirant (9b), respectivement du quatrième tirant (9d), comprend un dispositif de rattrapage de jeu (21).

5. Poutre (1) selon l'une quelconque des revendications précédentes, **caractérisée en ce que** ledit même orifice de fixation de la première ailette plane (11a), respectivement de la deuxième ailette plane (11b), est situé au centre de la première ailette plane (11a), respectivement de la deuxième ailette plane (11b).

6. Poutre (1) selon l'une quelconque des revendications précédentes, dans laquelle ledit ensemble de trois longerons (2, 3, 4) est constitué d'un longeron inférieur (4), d'un premier longeron supérieur (2) et d'un deuxième longeron supérieur (3), et chaque assemblage triangulaire comporte une traverse supérieure (5) reliant le premier longeron supérieur (2) avec le deuxième longeron supérieur (3), une première traverse latérale (6) reliant le premier longeron supérieur (2) avec le longeron inférieur (4) et une deuxième traverse latérale (7) reliant le deuxième longeron supérieur (3) avec le longeron inférieur (4), la première extrémité et la deuxième extrémité de chaque traverse supérieure (5) d'un assemblage triangulaire donné étant fixées directement respectivement sur une première platine de fixation (8a) de ladite pluralité des platines de fixation fixée au premier longeron supérieur (2) et sur une deuxième platine de fixation (8b) de ladite pluralité des platines de fixation fixée au deuxième longeron supérieur (3),
la première extrémité et la deuxième extrémité de chaque première traverse latérale (6) dudit assemblage triangulaire donné étant fixées directement respectivement sur la première platine de fixation (8a) et sur une troisième platine de fixation (8c) de ladite pluralité des platines de fixation fixée au longeron inférieur (4),
et la première extrémité et la deuxième extrémité de chaque deuxième traverse latérale (7) dudit assemblage triangulaire donné étant fixées directement, respectivement sur la deuxième platine de fixation (8b) et sur la troisième platine de fixation (8c).

7. Poutre (1) selon la revendication 6, **caractérisée en ce que** les traverses supérieures (5) et les premières et deuxièmes traverses latérales (6,7) sont de même longueur de manière à obtenir des assemblages triangulaires équilatéraux, et **en ce que** la première ailette plane (11a) et la deuxième ailette plane (11b) de chacune des première, deuxième et troisième platines de fixation (8a, 8b, 8c) forment entre elles un angle sensiblement égal à 60°.

8. Poutre (1) selon la revendication 6, **caractérisée** en ce les premières et deuxièmes traverses latérales (6, 7) sont de même longueur de manière à obtenir des assemblages triangulaires isocèles, en ce que la première ailette plane (11a) et la deuxième ailette plane (11b) de chacune des première et deuxième platines de fixation (8a, 8b) forment entre elles un angle sensiblement égal à 45°, et en ce que la première ailette plane (11a) et la deuxième ailette plane (11b) de la troisième platine de fixation (8c) forment entre elles un angle sensiblement égal à 90°.

9. Suiveur solaire, **caractérisé en ce qu'**il comporte une poutre (1) selon l'une quelconque des revendications 7 ou 8, ladite poutre supportant une table d'un suiveur solaire équipée d'au moins un dispositif de collecte d'énergie solaire et reposant sur le premier longeron supérieur (2) et sur le deuxième longeron supérieur (3).

## Patentansprüche

1. Gitterförmiger Trägerbalken (1) mit dreieckigem Querschnitt, umfassend:
- einen Satz von drei Längsträgern (2, 3, 4), die sich parallel entlang einer Haupterstreckungsrichtung des Balkens erstrecken,
- eine Vielzahl von Dreiecksverbindungen, die entlang der Haupterstreckungsrichtung verteilt sind und sich jeweils in einer Ebene senkrecht zu der Haupterstreckungsrichtung erstrecken, wobei jede Dreiecksverbindung durch drei Querträger (5, 6, 7) gebildet ist, die die Längsträger paarweise mechanisch miteinander verbinden,
- eine Vielzahl von Zugstangen (9, 9a, 9b, 9c, 9d), die jeweils die Längsträger (2, 3, 4) paarweise mechanisch miteinander verbinden, indem sie sich zwischen zwei aufeinanderfolgenden Dreiecksverbindungen erstrecken,
- eine Vielzahl von an den Längsträgern befestigten Befestigungsplatten (8a, 8b, 8c), wobei jede an einem bestimmten Längsträger der drei Längsträger befestigte Befestigungsplatte (8a, 8b, 8c) eine erste ebene Rippe (11a) und eine zweite Ebene Rippe (11b) aufweist, die sich radial zu dem bestimmten Längsträger erstreckt, wobei die erste ebene Rippe (11a) eine erste Befestigungsfläche zur lösbaren Befestigung eines Endes eines ersten Querträgers (6) der Vielzahl von Querträgern, eines Endes einer ersten Zugstange (9a) und eines Endes einer zweiten Zugstange (9b) aus der Vielzahl von Zugstangen bildet, und die zweite ebene Rippe (11b) eine zweite Befestigungsfläche zur lösbaren Befestigung eines Endes eines zweiten Querträgers (7) aus der Vielzahl von Querträgern, eines Endes eines dritten Zugstange (9c) und eines Endes einer vierten Zugstange (9d) der Vielzahl von Zugstangen bildet, wobei jede Befestigungsplatte (8a, 8b, 8c) eine mittlere Fläche (10) umfasst, die sich der äußeren Form und dem gegebenen Längsträger anpasst und fest mit dem gegebenen Längsträger verbunden ist, wobei die erste ebene Rippe (11a) und die zweite ebene Rippe (11b) die mittlere Fläche (10) seitlich verlängern, indem sie sich radial in Bezug auf den gegebenen Längsträger erstrecken,
**dadurch gekennzeichnet, dass** das Ende des ersten Querträgers (6), das Ende der ersten Zugstange (9a) und das Ende der zweiten Zugstange (9b) durch ein einziges erstes Verschraubungssystem (14) mit einer Befestigungsschraube (15), die durch dieselbe Befestigungsöffnung der ersten ebenen Rippe (11a) verläuft, aneinander befestigt sind, dass das Ende des zweiten Querträgers (7), das Ende der dritten Zugstange (9c) und das Ende der vierten Zugstange (9d) durch ein einziges zweites Verschraubungssystem (17) mit einer Befestigungsschraube (18), die durch eine gleiche Befestigungsöffnung der zweiten ebenen Rippe (11b) verläuft, aneinander befestigt sind, dass das Ende des ersten Querträgers (6) an einer Innenseite der ersten ebenen Lamelle (11a) befestigt ist, während das Ende des ersten Zugstange (9a) und das Ende des zweiten Zugstange (9b) an einer Außenseite der ersten ebenen Lamelle (11a) befestigt sind, und dass das Ende des zweiten Querträgers (7) an einer Innenseite der zweiten ebenen Lamelle (11b) befestigt ist, während das Ende der dritten Zugstange (9c) und das Ende der vierten Zugstange (9d) an einer Außenseite der zweiten ebenen Rippe (11b) befestigt sind.

2. Balken (1) nach Anspruch 1, **dadurch gekennzeichnet, dass** jede Befestigungsplatte (8a, 8b, 8c) mittels Nieten (13) an der mittleren Fläche (10) fest mit dem gegebenen Längsträger (2, 3, 4) verbunden ist.

3. Balken (1) nach einem der vorherigen Ansprüche, **dadurch gekennzeichnet, dass** das Ende der ersten Zugstange (9a) bzw. der dritten Zugstange (9c) die Außenseite der ersten ebenen Rippe (11a) bzw. die Außenseite der zweiten ebenen Rippe (11b) berührt.

4. Balken (1) nach Anspruch 3, **dadurch gekennzeichnet, dass** das Ende der zweiten Zugstange (9b) bzw. der vierten Zugstange (9d) eine Spielausgleichsvorrichtung (21) umfasst.

5. Balken (1) nach einem der vorherigen Ansprüche, **dadurch gekennzeichnet, dass** die gleiche Befestigungsöffnung der ersten ebenen Rippe (11a) bzw. der zweiten ebenen Rippe (11b) in der Mitte der ersten ebenen Rippe (11a) bzw. der zweiten ebenen Rippe (11b) angeordnet ist.

6. Balken (1) nach einem der vorherigen Ansprüche, wobei die Anordnung von drei Längsträgern (2, 3, 4) aus einem unteren Längsträger (4), einem ersten oberen Längsträger (2) und einem zweiten oberen Längsträger (3) besteht, und jede Dreiecksanordnung einen oberen Querträger (5), der den ersten oberen Längsträger (2) mit dem zweiten oberen Längsträger (3) verbindet, einen ersten seitlichen Querträger (6), der den ersten oberen Längsträger (2) mit dem unteren Längsträger (4) verbindet, und einen zweiten Seitlichen Querträger (7), der den zweiten oberen Längsträger (3) mit dem unteren Längsträger (4) verbindet, aufweist, wobei das erste Ende und das zweite Ende von jedem oberen Querträger (5) einer gegebenen Dreiecksanordnung direkt an einer ersten Befestigungsplatte (8a) der Vielzahl von Befestigungsplatten, die an dem ersten oberen Längsträger (2) befestigt ist, bzw. an einer zweiten Befestigungsplatte (8b) der Vielzahl von Befestigungsplatten, die an dem zweiten oberen Längsträger (3) befestigt ist, befestigt sind,
das erste Ende und das zweite Ende von jedem ersten seitlichen Querträger (6) der gegebenen dreieckigen Anordnung direkt an der ersten Befestigungsplatte (8a) bzw. an einer dritten Befestigungsplatte (8c) der Vielzahl von Befestigungsplatten, die an dem unteren Längsträger (4) befestigt sind, befestigt sind,
und das erste Ende und das zweite Ende von jedem zweiten seitlichen Querträgers (7) der gegebenen dreieckigen Anordnung direkt jeweils an der zweiten Befestigungsplatte (8b) und an der dritten Befestigungsplatte (8c) befestigt sind.

7. Balken (1) nach Anspruch 6, **dadurch gekennzeichnet, dass** die oberen Querträger (5) und der erste und der zweite seitliche Querträger (6, 7) die gleiche Länge aufweisen, sodass gleichseitige Dreiecksverbindungen entstehen, und dass die erste ebene Rippe (11a) und die zweite ebene Rippe (11b) von jeder der ersten, der zweiten und der dritten Befestigungsplatte (8a, 8b, Be) untereinander einen Winkel von im Wesentlichen 60° einschließen.

8. Balken (1) nach Anspruch 6, **dadurch gekennzeichnet, dass** der erste und der zweite seitliche Querträger (6, 7) gleich lang sind, sodass gleichschenklige Dreiecksverbindungen entstehen, dass die erste ebene Rippe (11a) und die zweite ebene Rippe (11b) von jeder der ersten und der zweiten Befestigungsplatte (8a, 8b) untereinander einen Winkel bilden, der im Wesentlichen gleich wie 45° ist, und dass die erste ebene Rippe (11a) und die zweite ebene Rippe (11b) der dritten Befestigungsplatte (8c) untereinander einen Winkel bilden, der im Wesentlichen gleich wie 90° ist.

9. Sonnennachführung, **dadurch gekennzeichnet, dass** sie einen Balken (1) nach einem der Ansprüche 7 oder 8 umfasst, wobei der Balken einen Tisch einer Sonnennachführung trägt, der mit mindestens einer Vorrichtung zum Sammeln von Sonnenenergie ausgestattet ist und auf dem ersten oberen Längsträger (2) und dem zweiten oberen Längsträger (3) aufliegt.

## Claims

1. A lattice-form support beam (1) with triangular cross-section, including:
- a set of three side rails (2, 3, 4) extending parallel along a main direction of extension of the beam,
- a plurality of triangular assemblies distributed along the main extension direction and each extending in a plane perpendicular to said main direction of extension, each triangular assembly being formed by three cross-beams (5, 6, 7) mechanically connecting the side rails in pairs,
- a plurality of tie rods (9, 9a, 9b, 9c, 9d) each mechanically connecting the side rails (2, 3, 4) in pairs, extending between two consecutive triangular assemblies,
- a plurality of fastening plates (8a, 8b, 8c) fastened to the side rails, each fastening plate (8a, 8b, 8c) fastened to a given side rail among the three side rails including a first flat flange (11a) and a second flat flange (11b) extending radially with respect to said given side rail, the first flat flange (11a) forming a first fastening surface for removable fastening one end of a first cross-beam (6) among said plurality of cross-beams, one end of a first tie rod (9a) and one end of a second tie rod (9b) among said plurality of tie rods, and the second flat flange (11b) forming a second fastening surface for the removable fastening of a second cross-beam (7) among said plurality of cross-beams, of an end of a third tie rod (9c) and of an end of a fourth tie rod (9d) among said plurality of tie rods, each fastening plate (8a, 8b, 8c) comprising a central surface (10) matching the external shape of said given side rail and being rigidly attached to said given side rail, said first flat flange (11a) and said second flat flange (11b) extending laterally from the central surface (10) and extending radially with respect to the given side rail,
**characterized in that** the end of the first cross-beam (6), the end of the first tie rod (9a) and the end of the second tie rod (9b) are fastened together by a single first bolting system (14) including a fastening screw (15) crossing through the same fastening hole of the first flat flange (11a), **in that** the end of the second cross-beam (7), the end of the third tie rod (9c) and the end of the fourth tie rod (9d) are fastened together by a single second bolting system (17) including a fastening screw (18) crossing through the same fastening hole of the second flat flange (11b), **in that** the end of the first cross-beam (6) is fastened to an inner face of the first flat flange (11a) while the end of the first tie rod (9a) and the end of the second tie rod (9b) are fastened to an outer face of the first flat flange (11a), and **in that** the end of the second cross-beam (7) is fastened to an inner face of the second flat flange (11b) while the end of the third tie rod (9c) and the end of the fourth tie rod (9d) are fastened to an outer face of the second flat flange (11b).

2. The beam (1) according to claim 1, **characterized in that** each fastening plate (8a, 8b, 8c) is rigidly attached to the given side rail (2, 3, 4) by means of rivets (13) at the central surface (10).

3. The beam (1) according to any of the preceding claims, **characterized in that** the end of the first tie rod (9a), and of the third tie rod (9c), respectively, are in contact with the external face of the first flat flange (11a), and the external face of the second flat flange (11b), respectively.

4. The beam (1) according to claim 3, **characterized in that** the end of the second tie rod (9b) or of the fourth tie rod (9d) comprises a clearance compensation device (21).

5. The beam (1) according to any of the preceding claims, **characterized in that** the said same fastening hole of the first flat flange (11a), and of the of the second flat flange (11b), respectively, is located at the center of the first flat flange (11a), and of the second flat flange (11b), respectively.

6. The beam (1) according to any of the preceding claims, wherein said set of three side rails (2, 3, 4) consists of a lower side rail (4), a first upper side rail (2) and a second upper side rail (3), and each triangular assembly includes an upper cross-beam (5) connecting the first upper side rail (2) to the second upper side rail (3), a first lateral cross-beam (6) connecting the first upper side rail (2) to the lower side rail (4) and a second lateral cross-beam (7) connecting the second upper side rail (3) to the lower side rail (4), the first end and the second end of each upper cross-beam (5) of a given triangular assembly are fastened directly to a first fastening plate (8a) of said plurality of fastening plates fastened to the first upper side rail (2) and to a second fastening plate (8b) of said first fastening plate of said plurality of mounting plates fastened to the second upper side rail (3), respectively, the first end and the second end of each first lateral cross-beam (6) of said given triangular assembly being fastened directly to the first fastening plate (8a) and to a third fastening plate (8c), respectively, of said plurality of fastening plates fastened to the lower side rail (4),
and the first end and the second end of each second lateral cross-beam (7) of said triangular assembly being directly fastened onto the second fastening plate (8b) and on the third fastening plate (8c), respectively.

7. The beam (1) according to claim 6, **characterized in that** the upper cross-beams (5) and the first and second lateral cross-beams (6,7) are of the same length so as to obtain equilateral triangular assemblies, and **in that** the first flat flange (11a) and the second flat flange (11 b) of each of the first, second and third fastening plates (8a, 8b, 8c) form therebetween an angle substantially equal to 60°.

8. The beam (1) according to claim 6, **characterized in that** the first and second lateral cross-beams (6, 7) are of the same length so as to obtain isosceles triangular assemblies, **in that** the first flat flange (11a) and the second flat flange (11b) of each of the first and second fastening plates (8a, 8b) form an angle therebetween substantially equal to 45°, and **in that** the first flat flange (11a) and the second flat flange (11b) of the third fastening plate (8c) form therebetween an angle substantially equal to 90°.

9. Solar tracker, **characterized in that** same comprises a beam (1) according to any of claims 7 or 8, said beam supporting a table of a solar tracker equipped with at least one solar energy collecting device and resting on the first upper side rail (2) and on the second upper side rail (3).
